# EUROPEAN PATENT SPECIFICATION

(11) **EP 2 211 662 B1**
(45) Date of publication and mention of the grant of the patent: **07.05.2014**
(21) Application number: 07764450.8
(22) Date of filing: 29.06.2007
(51) Int. Cl.: A01M 29/34, A45F 3/52, A47C 29/00

(54) **INSECTICIDAL BARRIER PARTLY WITH SYNERGIST**
INSEKTIZIDSPERRE, TEILWEISE MIT SYNERGIST
BARRIÈRE INSECTICIDE CONTENANT EN PARTIE UN SYNERGISTE

(43) Date of publication of application: 04.08.2010
(73) Proprietor: Vestergaard Frandsen SA, 1006 Lausanne (CH)
(72) Inventor: VESTERGAARD FRANDSEN, Mikkel, CH-1003 Lausanne (CH)
(74) Representative: Nielsen, Leif
(86) International application number: PCT/DK2007/000320
(87) International publication number: WO 2009/003469

(56) References cited:
- WO-A-01/37662
- WO-A-03/003827
- WO-A-03/034823
- WO-A-03/090532

## Description

### FIELD OF THE INVENTION

The present invention relates to insecticidal barriers of non-living material containing insecticide and synergists, for example mosquito nets.

### BACKGROUND OF THE INVENTION

Different insecticidal treatments of nets and different applications of such nets are disclosed in prior art, for example the general treatment of a netting in International patent application WO01/37662 by Skovmand, the application as a fencing in International patent application WO03/003827 by Bauer and Skovmand, the application as a protective cover in International patent application WO03/090532 by Vestergaard Frandsen, or the application as an air cleaning net in International patent application WO06/024304 by Vestergaard Frandsen. Examples of different insecticides on an object, such as a net, are disclosed in these references. Also, P.Guillet et al propose a combination of a carbamate in the roof of a mosquito net and a pyrethroid in the wall of the mosquito net in their article "Combined pyrethroid and carbamate 'two-in-one' treated mosquito nets: field efficacy against pyrethroid-resistant Anopheles gambiae and Culex quinquefacius", published in Medical and Veterinary Entomology (2001) 15, 105-112.

One of encountered problems for mosquito nets and insecticidal fabrics has turned out in field studies, where it has been found that the efficiency of mosquito nets is reduced when exposed to sunlight or by general exposure to heat. In order to keep a long lasting efficiency, it has been proposed in International patent application WO 03/063587 by Vestergaard Frandsen to incorporate insecticide inside a fibre structure with gradual migration of the insecticide to the surface of the fibre, where this insecticide is combined with a UV protecting agent.

In order to enhance the efficiency on a general basis, synergists have been proposed to be included in fabrics and nettings. For example, in US patent application US 2007/0009563 by Hataipitisuk and in International patent application WO 90/14006 by Mooney et al., PBO is proposed as efficiency enhancer in insecticidal fibres and fabrics. International Patent applications WO06/128867 by Koradin et al, and WO06/128870 by Karl et al. propose PBO as a synergist in fabrics and nettings.

In Japanese patent application JPS59-50382U by Dainihon Jochugiku, a carpet is disclosed with insect repellent properties and at the same time antimicrobial properties in order to prevent mold on the underside of the carpet. Various possibilities for combinations of active agents are presented with or without synergist as well as antimicrobials.

Generally, there is an increased problem with metabolic of insects against insecticides, and Piperonyl Butoxide (PBO) has been proposed for counteracting resistance. In connection with field spraying, PBO is known as a resistance reducer, for example as disclosed in UK patent application 2 388 778 assigned to Rothamsted. US patent 5 503 918 by Samson et al. discloses amylopectin as an insecticidal synergist in tent fabrics, and US 3 859 121 by Yeadon et al. discloses the use of PBO as a synergist in packaging.

However, synergistic chemicals are expensive and increase the cost for the treated fabric or netting, which in many situations is unfortunate, especially when the nettings or fabrics have to be provided in areas with low income. Thus, it would be desirable to provide a netting or fabric with a resistance reducing and efficiency enhancing property, on the one hand, and a low cost approach, on the other hand.

### DESCRIPTION / SUMMARY OF THE INVENTION

It is therefore the object of the invention to provide an insecticidal barrier with means that counteracts insecticidal resistance and enhances insecticidal efficiency but which minimises the costs for this means.

This object is achieved according to claim 1 with an insecticidal barrier of a non-living material, primarily a net or fabric, comprising a first region and a second region, wherein the first region comprises a synergist and the second region comprises an insecticide but no synergist for contact of the first region and the second region by a flying insect, wherein the barrier is a mosquito net, a wall linen, or a fence.

As only part of the barrier, for example a mosquito net, is provided with the synergist, the costs are lower than if the entire barrier is provided with a synergist. In this connection, it is envisaged that the area of the first region is in the order of the size of the second region or, referably, smaller than the second region, for example substantially smaller than the second region. The term "in the order of" is to be understood that the second region is at most 50% larger than the first region, preferably at most 20% larger than the first region. The term substantially smaller implies that the area of the first region is less than 50% of the area of the second region, preferably less than 25% or even less than 10% of the second region. Despite the area of the first region being smaller than the area of the second region, even substantially smaller than the second region, the synergist may, nevertheless be very efficient, as illustrated in more detail in the following.

An attempt to traverse the barrier will cause flying insects, especially mosquitoes, to contact several parts of the barrier during the search for passages in the barrier. As a result, there is a high probability that the insect contacts the first and also the second region, thereby, receiving the synergist and also the insecticide, despite the fact that the synergist only is on part of the barrier.

The term barrier is to be understood in a wide sense and does also include insecticidal traps. For example, the term barrier also covers a wall linen, onto which insects may rest and which the insect may have no intention to cross.

The term synergist comprises one synergist or a plurality of synergists, where the plurality of synergist may be a mixture but need not be so. The first region may comprise a first synergist in part of the first region and another synergist or other synergists in other parts of the first region. The term synergist also covers an analogue or precursor for a synergist. The term insecticide covers one insecticide or a plurality of insecticides, where the plurality of insecticides may be a mixture but need not be so. The second region, or alternatively the first and the second region, may comprise a first insecticide in part of the second region and another insecticide or other insecticides in other parts of the second region.

In a further embodiment, the first region is an upper part of the barrier and the second region is a lower part of the barrier. Many mosquito nets are provided with a distinct roof and distinct side walls, and it is an advantage to provide the roof with a synergist and the side walls with an insecticide but without the synergist. The advantage is manifold. Firstly, it has been observed that mosquitoes typically land on the roof of the mosquito net in their first attempt to transverse the barrier. At this instance, synergist is transferred to the mosquito. During further attempts, the mosquito works its way down and takes up insecticide. This take-up is delayed relative to the synergist uptake and increases the efficiency due to the gradual resistance breakdown by the synergist. A second advantage is that the area of the roof part of the mosquito net is much smaller than the area of the side walls. Thus, a relatively small area of the net has to comprise a synergist, which means that the price for a net is not increased much relative to a standard insecticidal net. Having regard to the above mentioned fact that mosquitoes typically land on the roof of the net first, the anti-resistance property of such a mosquito net is not much smaller that if the entire net were treated by a resistance breaking synergist, for example PBO.

As the synergist enhances the activity of the insecticide, the amount of insecticide may be reduced on the second region of the barrier, which reduces the overall costs for the barrier and at the same time minimizes the amount of insecticide released into the environment. Generally, the costs of the insecticide, for example synthetic pyrethroids, are relatively high. Thus, a minimising of the amount of insecticide is generally desirable, also with regard to reduced influence on the environment. In the case of the example with a mosquito net as the barrier according to the invention, the reduction of insecticide on the side wall may balance the additional expenses due to the synergist, especially, because the area of the side walls is larger than the area of the top part.

The first region of the barrier may contain one or more synergists and one or more insecticides. In this case, both synergist and insecticide is transferred to the insect upon contact, which implies that the insecticidal efficiency and a resistance breakdown starts immediately. In case of the barrier being a mosquito net of the above described type with a roof and side walls, the roof of the net will act insecticidal already at first contact by a mosquito. This embodiment also has the advantage that a prefabricated insecticidal net material can be used for both the roof and the side walls, where the roof is treated with a synergist in addition to the insecticide in or on the roof material. For example, a standard insecticidal net may be used as a basis material and treated with a synergist in the roof part as part of the invention.

Alternatively, the first region may comprise a synergist but no insecticide. This reduces the expenses for insecticide, because the first region does not require this kind of chemicals. In the case of the mosquito net example, the roof part and the walls of the net may be treated differently. For example, the roof part may be impregnated with a synergist and the side walls may be impregnated with an insecticide or have the insecticide incorporated in the material of the netting. Incorporation of insecticides in described in International patent application WO 03/063587 by Vestergaard Frandsen.

The first region of the barrier may be provided by a polymer matrix into which the synergist in incorporated for gradual migration from the inside of the matrix to the surface of the matrix, or, alternatively, the first region is provided by a polymer matrix into which the synergist is impregnated into a substantial depth from the surface of the matrix for gradual migration from the inside of the matrix to the surface of the material. This way, a long lasting effect is achieved. The synergist may be incorporated into the material, for example in the molten phase during production, where extrusion is one possibility. For example, the synergist may be impregnated or incorporated together with an insecticide or without insecticide.

One preferred combination is a polymer matrix of the first region with synergist, for example PBO, incorporated in the matrix material but without insecticides in the matrix, and with an insecticidal coating, for example containing deltamethrin, on at least part of the surface of the polymer matrix. Essential, in this connection, is that the matrix is provided insecticide-free but with synergist in an initial state. Therefore, in a further embodiment, the matrix of the non-living material is insecticide-free at least until the coating process. Though the matrix is free from incorporated insecticides in an initial state, the insecticide may migrate into the polymer matrix from the coating after a subsequent coating step, which is still within the scope of the invention. Therefore, in a further embodiment, the matrix has an initial, insecticide-free, solid state, where it contains at least one synergist, and wherein it has a final, solid state, where it contains an insecticidal coating. In order for the PBO to reach the surface of the first region, the film is open for migration of the synergist through the film.

By incorporating the synergist in the polymer matrix with the ability to migrate to the surface of the matrix, a product is provided that leaves open a high number of choices for the final insecticidal composition with which the matrix in the first region is coated.

Alternatively, the synergist may be applied to the surface of the first region, for example by film coating, surface printing or active printing.

For example, the first region and/or the second region may be coated with a wash resistant polymer film as disclosed in WO 01/37662. In this case, the film comprises a film forming component reducing wash off and degradation of the insecticide from the netting or fabric by forming a water and optionally oil resistant film, the film being a molecular shield on or around the matrix integrating the insecticide in the film, wherein the film forming component comprises a polymeric backbone fixative and one or more components selected from paraffin oils or waxes, silicons, silicon oils or waxes, and polyfluorocarbons, or derivatives thereof. Preferably, the film forming component comprises polyflurocarbon side chains attached to the polymeric backbone fixative. Preferably, the insecticide is migratably trapped between these polyfuorocarbon side chains and protected against water by the hydrophobic action of the polyfluorocarbon. This implies that the insecticide is protected from water or oil on the surface as long as the insecticide in within the protecting polyfuorocarbon. In this connection, it is important that the insecticide is trapped releasably between the side chains. In other words, the insecticide should have a mobility such that it can migrate to the surface of the film, out of the backbone in order for uptake by insects. The migration may be at least partly governed by a gradient of insecticide concentration, but active migration promoters or inhibitors may be applied as well in order to find the optimal migration speed, such that a sufficiently high dose of insecticide is on the outer surface of the fibre over a prolonged period.

In addition, also a synergist, for example PBO, may correspondingly be migratably trapped between the side chains in order to be protected against wash out and nevertheless be able to migrate gradually to the surface of the film for uptake by insects. This is advantageous in connection with the invention. However, the substitution of the insecticide by a combination of insecticide and synergist, for example deltamethrin and PBO, in a method and coating as disclosed in WO 01/37662 is of general nature and may used also on a wider level without the necessity of a first region having PBO and a second region having an insecticide.

In case that a film forming component is desired without insecticide but with synergist, for example PBO, the method as disclosed in WO 01/37662 may be used for a coating with the synergist taking the place of the insecticide in the coating. This is advantageous in connection with the invention but is of general nature and may used also on a wider level without the necessity of a first region having PBO and a second region having an insecticide.

In addition, the method according to the disclosure of WO 01/37662 with insecticide and/or synergist may be improved if
i) the insecticide and/or synergist is dissolved in a solvent combined with alcohol or glycol, the alcohol or glycol having a water content of less than 5%, or
ii) the insecticide and/or synergist is dissolved in a solvent and mixed with water or mixed with a water phase emulsion or solution having a temperature of less that 30°C, optionally, the solvent being combined with alcohol or glycol before the mixing,
or i) combined with ii). The improvement is due to the fact that two aspects i) and ii) both reduce the risk for precipitation of the insecticide in the combined solution. This reduction increases the lifetime of the insecticidal activity in the film and improves the wash resistance. This is especially true for pyrethroids, where the preferred insecticide is deltamethrin or permethrin. Thus applying either the step i) or applying the step ii) is an improvement as compared to prior art, however, the best improvements are achieved by using a combination of i) and ii).

The film forming component may comprise other components such as UV protecting agents, preservatives, detergents, fillers, impact modifiers, anti-fogging agents, blowing agents, clarifiers, nucleating agents, coupling agents, conductivity-enhancing agents to prevent static electricity, stabilizers such as anti-oxidants, carbon and oxygen radical scavengers and peroxide decomposing agents and the like, flame retardants, mould release agents, optical brighteners, spreading agents, antiblocking agents, anti-migrating agents, migration promoters, foam-forming agents, anti-soiling agents, anti-fouling agents, thickeners, further biocides, wetting agents, plasticizers adhesive or anti-adhesive agents, fragrance, pigments and dyestuffs and other liquids including water or organic solvents.

Alternative insecticidal coatings applicable in connection with the invention are disclosed in WO 2006/092094 by Liu et al. concerning a net/fabric coating containing a pesticide, an aqueous adhesive, like a waterborne polyurethane latex or polyacrylate latex, and a cross linking agent, like an epoxy polymer cross linking agent. A number of different formulations - also applicable in connection with the invention - are disclosed in WO 2006/092094, which, more specifically, disclosed a finishing liquid for repelling and killing mosquito/insect, whose formulation (based on mass percent) comprises:

| | |
|---|---|
| pesticide and/or repellent, | 0.05%-40.00%; |
| adhesive | 5.00%-40.00%; |
| cross-linking agent | 0.025%-1.50%; and |
| the rest is water, all the components amount up to 100%. | |

The pesticide in WO 2006/092094 is an aqueous pesticide with an effective content of 1-50%, and said aqueous pesticide is prepared from one or two of the following substances: deltamethrin, cyfluthrin, cyhalothrin, cis-cypermethrin, permethrin and etofen-pox. The repellent in WO 2006/092094 is an aqueous repellent with an effective content of 1-50%, and said aqueous repellent is prepared from one or two of the following substances: diethyltoluamide (DEET), dimethyl phthalate and permethrin. The aqueous dosage form of said pesticide and repellent in WO 2006/092094 includes one or two of the following dosage forms: wettable powder, water dispersible powder, water dispersible suspension, water dispersible tablet, emulsion in water, microcapsule suspension, and water dispersible granule. The adhesive in WO 2006/092094 is an aqueous adhesive with a solid content of 40-50%, which contains one or two of the following substances: polybutadiene latex, waterborne polyurethane latex, polyacrylic acid latex, polyacrylate latex or vinyl acetate latex. The cross-linking agent in WO 2006/092094 contains one or two of the following substances : epoxy polymer crosslinking agent, methyl-etherified hexahydroxymethyl melamine resin primary condensate crosslinking agent, multi-functional aziridine crosslinking agent, various hydroxymethyl crosslinking agents, a crosslinking agent consisting of hydroxyethyl and epoxy groups, and an acetate crosslinking agent of polycondensate of epoxy chloropropane and hexandiamine.

Preferably, the insecticide in connection with the invention is a pyrethroid, preferably deltamethrin or permethrin, but other pyrethroids may apply as well, as disclosed as a list in WO 01/37662. However, the invention applies as well in connection with cabamates or organophosphates in the composition for impregnation. A more extensive list of possible insecticide is found in WO 01/37662 or in WO 06/128870 also containing examples of repellents.

In addition, the term insecticide applies as well to insecticide combinations in the composition for impregnation according to the invention and as described above. For example, a pyrethroid may be combined with carbamates or organophosphates in order to combat resistant insects as well. Also, two or more insecticides may be applied on various parts of the net or fabric, for example by printing or spraying techniques, and not mixed and used homogeneously, which can be beneficially with respect to toxicological and registration reasons. Where nets are used in mass campaigns, an alternative or supplemental insecticide may also be an insecticide with a sterilising effect thus to sterilise the mosquitoes and avoid the next generation of mosquitoes. Such insecticides can be of the benzoyl urea group or triazins.

Further possible combinations include metaflumizone as disclosed in WO 06/127407, N-arylhydrazine as disclosed in WO06128870 or derivatives of 1-Phenyltriazole as disclosed in WO06128867, for example combined with a pyrethroid.

In addition, or alternatively, insecticides may be combined with synergists in the coating, for example piperonyl butoxide, Sulfoxide, Tropital, Bucarpolate, ethion, profenofos, or dimethoate, Piperonyl Cylonene, TPP, Di-ethyl maleate, NIA-16388 (NIA), S-421, MGK-264 (bicycloheptenedicarboximide), S,S,S-tributyl phosphorotrithoate (DEF), - N-Octylbicycloheptene dicarboxaminde, Sesamin, Sesamolin, or Sesamex.

A further alternative for a coating in connection with the invention is disclosed in US2007009563, wherein formula of solution according to various embodiments of the present invention comprises 4 portions as follows: 1. Insecticide from pyrethroid group such as deltamethrin, esfenvalerate, ethofenprox, biphenthrin, permethrin, and cyhalothrin which are quickly active and have a high boiling point. 2. A thread stabilizing enhancer, for example, a compound of perfluoro acrylate, resin, adhesive, and polyacrylate. 3. Thickeners such as starch, gum, and titanium dioxide. 4. Solvents, for example, water.

As mentioned above, in addition to the first region, the second region may be provided with insecticide in a film coating as well. Thus, the first region may be provided with a synergist in the first instance, after which the first region as well as the second region is coated with an insecticidal film.

The term coating covers surface applications that are applied in the liquid or gas phase and which get solid. As alternatives or additions to film coatings, synergist application and/or insecticidal surface applications to the first and/or second region may be achieved by printing substances containing synergist and/or insecticided onto the barrier. The printing can result in stuff or pasta provided onto the surface of the barrier or by active printing, where the insecticidal substance is entering the material of the fibre. A further means for providing synergist and/or insecticide to the surface of the barrier is by a laminate on the first and/or second region. In addition, synergists and/or insecticides may be provided by a combination of the above mentioned techniques.

If a surface application with insecticide is provided on top of the first region with the synergist, and the surface application covers a large part or all of the first region, the surface application has to be open for migration of the synergist to the surface of the barrier. However, if the surface application is applied to parts of the first region, for example by a print of small spots or stripes, the surface application need not necessarily be open for migration of the synergist. This would imply that only those regions, where no surface application has been provided, synergist can be transferred to insects.

Also other agents, for example insect sterilising agents or agents with entomopathogens, may be applied in the combat against insects in connection with the invention. For example, these may be applied to the surface of the barrier. An example of fungal biopesticide for insect combat is described by Thomas and Read in Nature Reviews Microbiology, Vol. 5, May 2007, p.377. Though at present, especially fungal endomo-pathogens seem the most useful, an insect infecting virus, bacteria or protozoa may be applied, alternatively or in addition.

By using printing techniques, not only insecticides and synergists can be applied to those regions, where it is desired, but also the above mentioned entomopathogens and/or insect sterilising agents. By using spraying or printing techniques, small spots or large areas may be provided with a precise positioning and precise dosing. Furthermore, different agents may be placed not only side by side but may be applied on top of each other with migration of the different agents through the covering layers.

As an example, a first regions of the net may contain a synergist, a second region ,ay contain insecticide, a third region may contain an entomopathogen, and a fourth region may contain a sterilising agent. Alternatively, only three of these agents may be used.

Alternatively, the second region is provided by a polymer matrix into which one or more insecticides is/are incorporated or impregnated for gradual migration from the inside of the material to the surface of the material in order to have a long lasting insecticidal efficiency. Impregnation and incorporation of insecticides is explained in more detail in International patent application WO 03/063587 by Vestergaard-Frandsen.

As a further alternative, the second region may be provided with a first insecticide incorporated or impregnated into the polymer matrix and with an insecticidal film in addition. The insecticide or insecticides in the matrix may be different from the insecticide in the film, which can be used as a further measure to counteract insecticidal resistance to one of the insecticides.

In the case of migration of synergist and/or insecticide in the first region, it is important to take into account the migration speed of the synergist and/or insecticide in the matrix and the migration speed of the further synergists or insecticides. For example, this may be regulated by a proper choice of selectively working migration promoters and migration inhibitors.

The barrier according to the invention may be provided as structurally different embodiments. For example, the barrier may be a net, a fabric, a film or a tarpaulin, or a combination of these. In a further embodiment, the first region of the barrier is provided by a type of barrier being either foil, tarpaulin, fabric or net, and the second region is provided by a type of barrier, for example foil, tarpaulin, fabric or net, different from the type of barrier of the first region. For example, the first region is provided by a net, whereas the second region is provided by a tarpaulin of film. Such a combination may be used for a fencing as disclosed in WO03/003827, where the lower part is a netting to prevent low flying insects to enter an open air area, and where the upper part is a tarpaulin material to trap insects that fly up along the net. The net provides synergist to the insect, which breaks down resistance, and the upper tarpaulin traps the insect for a time sufficiently long to be killed by the insecticide after breakdown of the resistance and before reaching the open air area.

The term fabric covers woven or knitted fabrics or non-woven and also covers Dumuria fabrics being special texturised woven fabrics. Commercially, Dumuria fabrics are available under the trademark PermaNet® Dumuria. Especially, the PermaNet® Dumuria fabrics, being an efficient insect barrier, experience increased success in rural areas due to its versatility and low cost. The preferred material for the fabric is polyolefin, especially polyester (Polyethylene Terephthalate, PET) or polyethylene. The synergist and/or insecticide can be incorporated in the material or provided as a coating, as described above. In connection with non-woven fabrics, the invention is especially useful for blankets. Such blankets may be provide with one side containing synergist and one side containing insecticide. Thus, the side in contact with the human body may contain a pyrethroid implying very low health risk for humans, whereas the other side may contain the synergist, for which extensive skin contact, typically, should be avoided. Use of non-woven blankets is described in International patent application WO 03/090532.

The different regions may also be sewed together, for example patchwork-like.

Another preferred use of the invention is for wall-linen, which is a fabric hanging against a wall with the purpose of transferring insecticide and synergist to insects resting on the wall-linen.

For applications, where the barrier is a net, for example a mosquito net in the form of a circular or rectangular canopy or an insect net in the form of a fence, the net has a mesh size preventing a selected target insect to transverse the net, whereas other insects may slip through the meshs. The mesh size depends on the purpose. However, it is possible that the barrier is a barrier for all types of insects, for example by being a tarpaulin, fabric or film. Insecticidal tarpaulins are disclosed in WO03/063587 by Vestergaard Frandsen and Skovmand.

Another way to reduce the amount of necessary synergist may be achieved by providing the barrier with a pattern that is mosaic-like with first regions comprising the synergist, optionally synergist mixed with insecticide, and being located between second regions comprising the insecticide without synergist. For example, the pattern could be horizontal or vertical stripes with alternating content of synergist and insecticide. In the case of the barrier being a mosquito net, a mosquito trying to enter the space behind the barrier would come in contact with several stripes and be exposed to both insecticides and synergist. As only part of the net is provided with synergist, the concentration of the synergist at the specific locations can be kept high even at low cost, because not the entire net has to contain a synergist, for example PBO. Other forms of patterns are possible, for example a check pattern similar to a chess board. Also in this case, the total area of the first regions may be smaller, potentially substantially smaller, than the region of the second regions.

Possible application techniques for synergist and/or insecticide application include printing techniques and spraying techniques. For example, synergists and/or insecticides can be printed on top of each other.

Application of the net according to this invention may in addition be in connection with nettings as disclosed in the aforementioned International patent application WO 01/37662, as a fencing as disclosed in International patent application WO 03/003827, as a protective cover as disclosed in International patent application WO 03/090532, as an air cleaning net as disclosed in International patent application WO06/024304 or incorporated inside a fibre structure with gradual migration to the surface of the fibre as disclosed in International patent application WO 03/063587 by Vestergaard-Frandsen. These disclosures are therefore incorporated herein by reference.

In case that the invention is used in connection with a fencing, a double-fence structure may be used if a high degree of protection against insects is desired, for example in order to protect human beings from being attacked by insects. This double-fence structure comprises a first fence at a distance from the protected open air area and a second fence surrounding the open air area at least partly. The first fence is provided with synergist and, optionally, insecticide. The second fence is provided with insecticide. Approaching low flying insects will contact the first fence first and pick up synergist, for example PBO, which gradually breaks down insecticidal resistance, such that delayed contact with the second fence has a high rate of insecticidal knock down, such that the insect does not have time enough after synergist pick up to attack humans. The highest mortality rate is expected if also the first fence is provided with an insecticide. This insecticide may, optionally, be different from the insecticide of the second fence.

A preferred embodiment concerns a bed net with a roof as the first region and comprising synergist, the bed net having side walls as the second region and comprising insecticide, wherein the side walls are provided with a protective skirt at the lower edge of the side walls. The material for such a skirt is preferably a foil, a fabric or a tarpaulin. A further useful application of the principles according to the invention is in connection with an insecticidal barrier that has an upper insecticidal first region with a mesh size preventing selected insects, for example mosquitoes, to transverse the barrier. The second region has a lower part extending up to a height of more than 40 cm from the lower edge of the barrier, for example more than 60 cm or 80 cm from the lower edge. In another embodiment, the lower part of the barrier extends only up to a height of 80 cm or 100 cm. For example, the second region may extend up to a height between 60 and 80 cm or between 80 and 100 cm, preferably around 90 cm.

For example, the lower region may have an upper part and a lower part, the upper part being a net and the lower part comprising an insecticidal fabric, an insecticidal tarpaulin an insecticidal net with a net material having a higher tear strength than the net of the upper part, or a combination of these. By providing a lower part with a fabric, a tarpaulin, a foil, or a net material having higher tear strength than the net of the upper part, the risk for tears in the barrier is reduced, because especially the lower part, typically is exposed to mechanical wear.

In addition, in connection with mosquito nets, where the first region is made of a net as well as the upper part of the lower region being a net, a fabric, a tarpaulin or a foil, the lower part prevents sand flies from hopping into the area underneath the barrier. Sand flies are generally dangerous, as their bite can cause Leishmaniasis. In prior art mosquito nets, sand flies are not prevented from entering the nets, as they can enter through the meshes of the nets. However, as sand flies do not hop very high, the invention has the advantage of preventing sand flies bites as well, even in the case of the barrier being a mosquito net.

The lower part of the insecticidal barrier, may extend down to the floor or down to a fabrics skirt, tarpaulin skirt or foil skirt, where the skirt extends up to a certain height, for example 10 cm or 25 cm. Such skirts, themselves, are known for canopy-like barriers of the circular or rectangular type, usually used for bed nets.

On preferred solution is a bed net or other kind of mosquito net type barrier with a roof part as the first region containing synergist, optionally in combination with insecticide, and side walls as the second region containing insecticide and no synergist, and a skirt made of fabrics, tarpaulin, foil, or net material having higher tear strength than the net of the upper part, for example by having thicker threads and smaller mesh size.

Another preferred embodiment is an insecticidal barrier - not necessarily with a roof - wherein the first region comprises a upper part of the barrier, for example the upper part of side walls, and the second region comprises the lower part of the barrier, for example the lower part of the side walls. For example the lower part extending up to more than 60 cm from the lower edge and, optionally, up to 80 cm or 100 cm from the lower edge. In addition, the barrier comprises a skirt extending to a certain height, for example 10 cm or 25 cm from the lower edge of the barrier. For preferably, as a lower part, the second region comprises an insecticidal fabric, an insecticidal tarpaulin an insecticidal net with a net material having a higher tear strength than the net of the upper part, or a combination of these. For example, a higher tear strength can be achieved by using a stronger material for the net.

In an advantageous embodiment, the lower part of the second region may have a higher mesh density, a higher yarn density, and/or a higher weight density. A net with a higher mesh density and/or yarn density can also be achieved in a single production process, where the weave process is different for the lower part, for example by including additional threads.

In a practical embodiment, the polymer matrix of the first region is formed by extrusion of molten thermoplastic polymer through an extrusion nozzle. This method may provide fibres for nets and fabrics. The synergist can be added to the molten polymer through a channel before the polymer transporting screw, or - if only a very short contact time is desired between the hot polymer and the insecticide/synergist - just upstream of the extrusion nozzle or even in the extrusion nozzle. This may in certain combinations be critical, especially, if the matrix is made of polyester (Polyethylene Terephthalate, PET) a preferred material for fabrics and nettings. This is so, because the melting temperature of polyester is around 250°C, which may lead to disintegration of synergist or insecticidal material.

However, the degree of decomposition and physical loss of the synergistic or insecticidal agent is not only dependent on the temperature but also dependent on the time for which the agent is exposed to the high temperature. By minimizing the contact time of agent with high temperature, the loss is reduced significantly. Loss here includes evaporation and possible thermal decomposition.

Thus, in order to minimize the exposure time for the high temperature, a special principle of an extrusion nozzle has been invented. This principle is a nozzle with a channel through which the synergist is added into the molten polymer during the extrusion process, wherein the channel is provided at a short distance upstream of the nozzle exit. In this context, the term "short distance" is to be understood as a distance that results in a temperature increase in the synergist or insecticide and a time lapse at this temperature which leaves a still sufficient amount of intact synergist or insecticide in the extruded matrix. For example, the distance may be chosen to yields a maximum temperature increase in the synergist or insecticide and a maximum time of exposure of the synergist or insecticide to this temperature increase, wherein the maximum temperature and the maximum time are limited by predefined upper levels.

How much this "sufficient amount" is, depends on the synergist and/or insecticide and the acceptable level of loss. In certain cases, a loss of 99% can be acceptable, if the 1% remaining synergist and/or insecticide is still within the range of effective amounts to counteract insecticidal resistance for a long term. In other cases, a loss rate of less than 90% may be acceptable. Thus, the invention provides a method for incorporating synergists and/or insecticide in thermoplastic polymers, despite the fact that the melting temperature of the polymer is far above the boiling temperature of the synergist and/or the decomposition temperature of the insecticide. In experiments, it has surprisingly turned out that for polyester, more than 50% of the synergist stays intact despite an extrusion temperature of more than 250°C.

In a preferred embodiment, the channel is provided in the side of an extrusion, for example within a few mm or cm from the nozzle exit. This implies that the agent with the synergist and/or insecticide is first subjected to the temperature of the polymer when it enters the nozzle. For example, the nozzle may be surrounded by a ring-formed agent supply conduit injecting the agent into the molten polymer substantially over the entire rim of the polymer stream through the nozzle.

This leaves also the possibility of cooling the agent before injection, such that the temperature increase of the agent due to the uptake of heat from the polymer accelerates the hardening and cooling of the polymer. In addition, the extruded polymer may be actively cooled at a short distance downstream of the extrusion nozzle, for example by a cold air jet.

Despite the above possibility to incorporate synergists and/or insecticides in polyester, the much lower melting temperature of polyethylene makes incorporation of synergists and/or insecticides into a polymer matrix much easier. Thus, in order to utilize this fact, the barrier according to the invention may be provided by multiple polymers, for example, with a first polymer for the first region and a second, different polymer for the second region.

In the case of the barrier being a canopy mosquito net, the roof part may be made of polyethylene and the side walls of polyester. It would then be relatively easy to incorporate synergists, for example PBO, into the roof part at relatively low melting temperature of the polymer. The more stiff and uncomfortable roof part of polyethylene is seldom touched by the user, whereas the side walls of the net may be made of polyester, which has a nice, soft, and cotton-like feeling.

### SHORT DESCRIPTION OF THE DRAWINGS

The invention will be explained in more detail with reference to the drawing, where
FIG. 1 shows a net according to the invention, where the net comprises a mixture of different type of threads;
FIG. 2 shows a pattern, where a first part of the pattern comprises a synergist and the second part comprises an insecticide but is without synergist;
FIG. 3 illustrates canopy nets with a) the upper part comprising a synergist and the lower part comprising insecticide without synergist, b) a pattern with longitudinal stripes, and c) a check pattern, d) a rectangular canopy;
FIG. 4 illustrates a fencing;
FIG. 5 illustrates a shelter;
FIG. 6 illustrates a tent;
FIG. 7 illustrates a canopy with skirt.

### DETAILED DESCRIPTION / PREFERRED EMBODIMENT

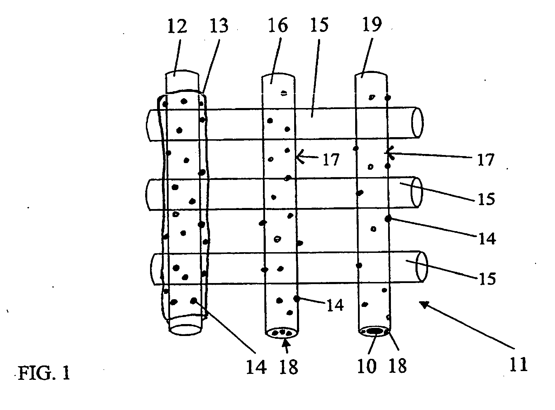

In FIG. 1, barrier 11, for example netting or fabric, is shown with a first type of threads 12 that have a surface layer 13 comprising a synergist - illustrated as dots 14 - and, optionally also an insecticide. A second type of threads 15 does not comprise any synergist. The insecticide may be applied to the surface of the barrier 11 by impregnation, for example through dipping in a suitable fluid mixture, or as a surface film. For illustration, a third type of threads 16 is shown, which is used as an alternative to the first type 12 of threads or in combination therewith, wherein the third type of threads 16 contains synergist 14, for example PBO, on the surface 17 which has been provided by migration from the inside of the material 18 of the thread 16. For illustration, a fourth type of threads 19 is illustrated, which is used as an alternative to the first type 12 or the third type 16 of threads. This fourth type of threads 19 is provided with a synergist reservoir 10 providing synergist 14 to the surface of the thread 19 through migration of the synergist 14 from the reservoir 10 through the fibre material 18' to the surface 17 of the thread 19. The first 12, the third 16, or the fourth 19 type of threads constitute the first region of the barrier of the invention, whereas the second type of threads constitutes the second region of the barrier. Though the shown threads are illustrated as single filaments, multi-filaments or plied threads apply as well.

Different kinds of threads, as illustrated in FIG. 1, are advantageously incorporated in bed nets and wall-linen, where the wall-linen covers a wall and transfers insecticide and synergist to insects that touch and rest on the wall-linen. The wall-linen prevents insects from traversing the barrier, and is, therefore, also called a barrier, even though it hangs on a wall which in itself would stop insects.

Though the first region and the second region according to the invention, according to the above illustration, may be understood as first type of threads and second type of threads interwoven, preferably, the first region comprises multiple threads and has an area much larger than the area of a single thread. Likewise, the second region, preferably, comprises multiple threads and has an area much larger than the area of a single thread in the barrier.

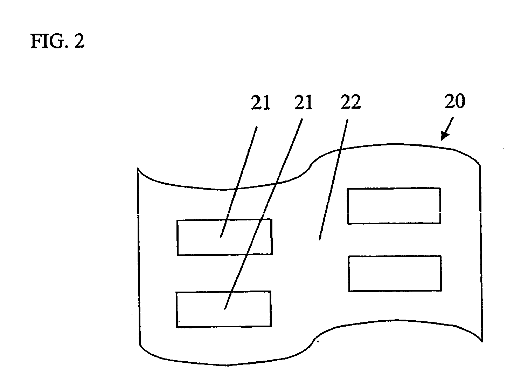

FIG. 2 shows a barrier 20 according to the invention, for example a net, a fabric, a film or a tarpaulin, where the barrier 20 is provided with a synergist pattern that is mosaic-like with first regions 21 comprising the synergist, optionally synergist and insecticide, and being located between second regions 22 comprising an insecticide without synergist. For example, the synergist may be incorporated into the material of the first region 21 for gradual migration to the surface of the material, whereas the insecticidal properties of the second region are provided by incorporating insecticide into the second region 21 for gradual migration of the insecticide to the surface of the material, or the insecticide is provided by impregnation or coating the barrier entirely or partly with an insecticidal film.

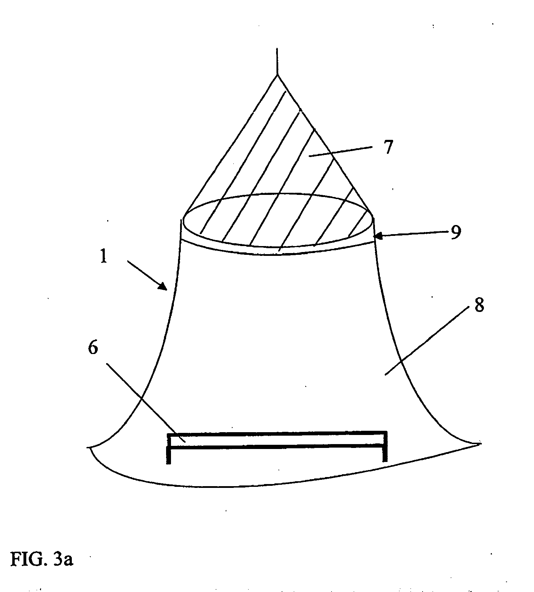

In FIG. 3a, illustrates a canopy net 1 above a bed 6 to protect human beings on the bed 6 from being attacked by insects, primarily mosquitoes. The first region of the net 1 comprises a synergist, for example PBO, optionally mixed with an insecticide, and the second region with the side walls 8 of the canopy 1 comprises an insecticide and is synergist-free. The first region is a roof 7 which is distinct from the side walls 8. For example, a stabilising ring 9 is inserted between the roof 7 and the side walls 8. The roof 7 may be made of a polymer material, for example polyethylene, being different to the polymer material, for example polyester, of the side walls 8. Using polyethylene for the roof 7 allows incorporation of the synergist into molten polymer at relatively low temperature before extrusion of fibres.

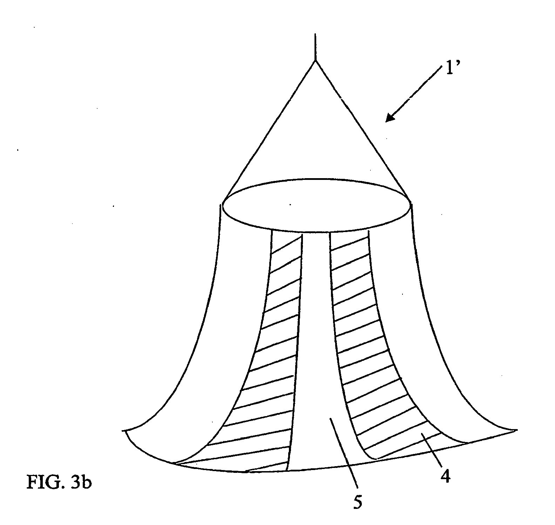

An alternative embodiment of a canopy 1' is shown in FIG. 3b, where the pattern is vertical having stripes 4 with synergist alternating with stripes containing insecticide 5. In this case the first region are the hatched stripes and the second region is the rest of the side walls. Optionally, the synergist 4 may be mixed with an insecticide. A mosquito trying to enter the space behind the barrier would come in contact with several stripes 4, 5 and be exposed to both insecticides and synergist. The width of the synergist stripes 4 may be substantially smaller than the width of the insecticidal stripes 5.

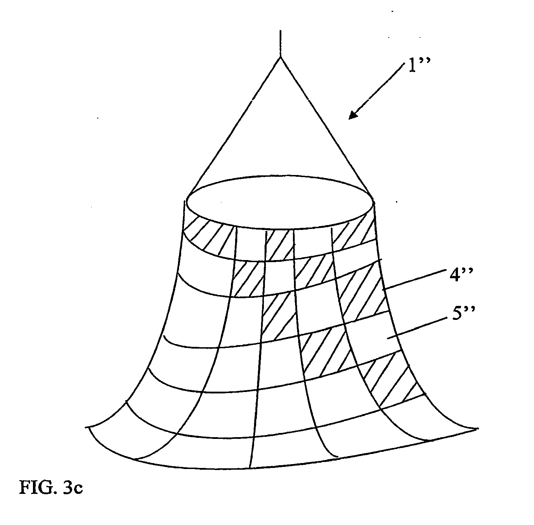

A further alternative is shown in FIG. 3c, where the canopy 1" has a check pattern similar to a chess board, with checks 4" with synergist, optionally synergist with insecticide, and checks 5" without synergist and with insecticide. Further alternatives may be provided by combining the principles of FIG. 3a, 3b and 3c, for example by including the roof 7 in the first region or by providing the roof part with a pattern as well.

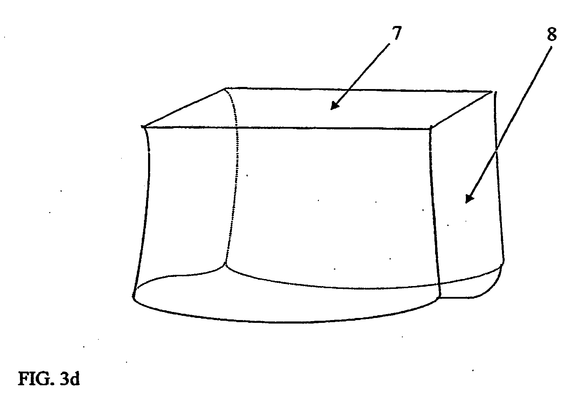

Though the canopies above are shown as circular canopies, this is only an example, and the invention applies equally well to other forms for canopies, for example rectangular, as illustrated in FIG. 3d. In addition, the invention also applies to canopy nets which do not have a distinct roof and distinct side walls, but where, nevertheless, the canopy has an upper first region and a lower second region.

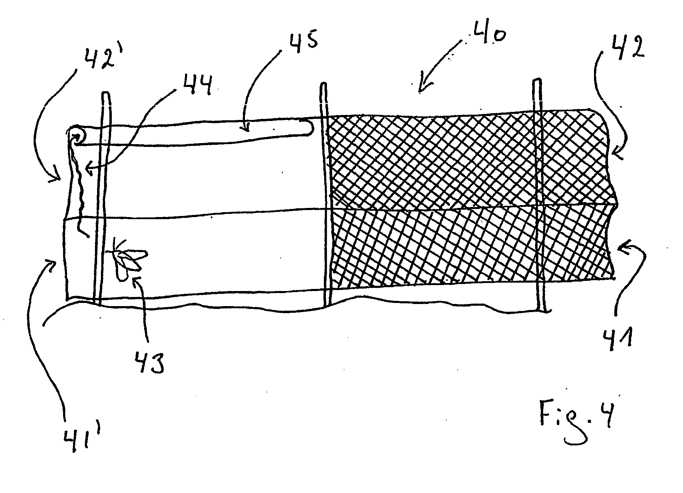

A further embodiment of the invention, inspired by the fence of WO03/003827, is shown in FIG. 4, where a fencing 40 is shown having synergist provided in the lower part 41 of the fence 40. Insecticide is provided in the upper part 42 of the fence 40 and, optionally, also on the lower part 41 of the fence 40. Such kind of fence is provided to protect open air areas against certain types of insects 43. Preferably, the fencing is made of nets as illustrated in the right part of FIG. 4 with a net in the lower part 41 of the fence 40 and in the upper part 42 of the fence 40. Alternatively, as illustrated in the left part of FIG. 4, the fence 40 may comprise a fabric, foil or tarpaulin in the lower part 41' of the fence and in the upper part 42' of the fence 40. Also possible are other combinations of nets, fabrics, films and tarpaulins. For example, the lower part 41' of the fence may be a tarpaulin, whereas the upper part 42 is a net.

Low flying insects 43 trying to enter the open air area will contact the lower part 41, 41' of the fence 40 first and then increase the flight height in order to traverse the fence 40. Having picked up synergist in the lower part 41,41' of the fence 40, the insects 43 will on its trajectory 44 during the travel up along the fence surface 44 pick up additional insecticide. Optionally, the fence 40 may be provided with a bend part 45 in the top of the fence 40 for trapping the insect inside the bent part 45.

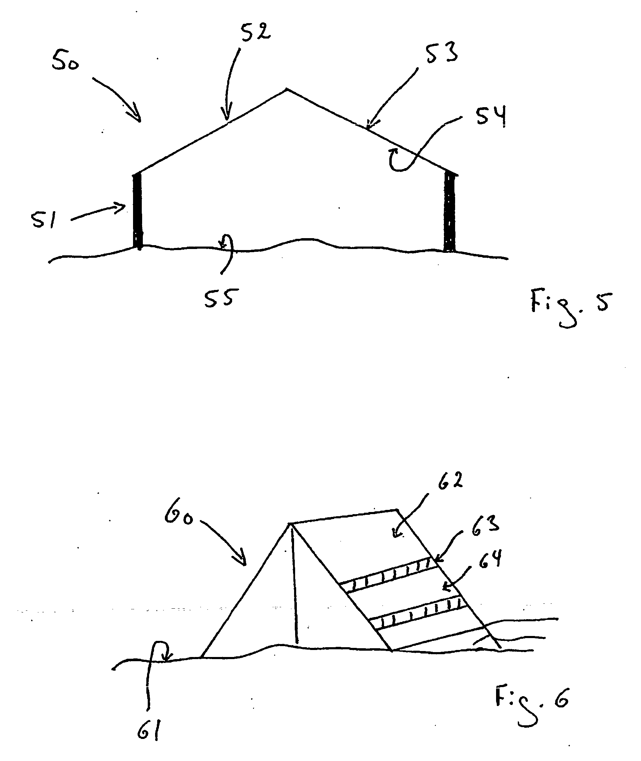

FIG. 5 illustrates a shelter 50 with a tarpaulin 52 supported on side walls 51 on ground 55. The tarpaulin has an inner surface 54 and an outer surface 53, wherein one of the surface constitutes the first region of the invention and is provided with a synergist and, optionally, with an insecticide, and wherein the other surface constitutes the second region containing insecticide but no synergist. The tarpaulin as used in FIG. 5 may be fabricated - as inspired by the disclosure of WO 03/063587 - with inner reservoirs for migration of the insecticide and/or the PBO from the reservoir through the material and to the surface of the material.

FIG. 6 illustrates a ground 61 supported tent 60, wherein the tent material 62, for example a fabric, is provided with a striped pattern with stripes 63 containing synergist and, optionally, insecticide, and other stripes 64 with insecticide but without synergist.

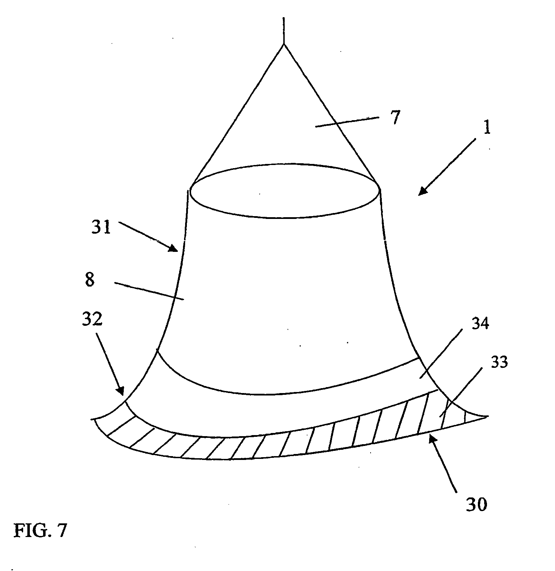

FIG. 7 illustrates a circular canopy insecticidal barrier according to the invention. The barrier 1 has a roof 7 and side walls 8 extending to the lower edge 30 of the barrier. The first region of the barrier includes the roof 7 and the upper part 31 of the side walls 8, whereas the second region includes the lower part 32 of the side walls. Alternatively, the first region includes only the roof 7, and the second region includes the side walls 8 with the upper part 31 and the lower part 32.

In order to enter the space underneath the canopy 1, the lower part 32 of the barrier 1 is exposed to surface touch and, therefore, exposed to abrasion of insecticide from the surface of the material. In order to counteract this reduction if insecticidal content by abrasion, the lower part 32 is made of a material that has a higher abrasion resistance than the upper part 31. For example, the upper part 31 is made of a net, whereas the lower part 32 is a foil, fabric, tarpaulin or a different net with higher tear strength.

The lower part 32 of the side walls 8 comprises in addition a skirt 33. Optionally, the skirt 33 may be made of a different material than the rest of the lower part 32. For example, the lower part 32 may be a fabric apart from the skirt 33 being a tarpaulin. Alternatively, the skirt 33 may be a fabric or tarpaulin, whereas the rest 34 of the lower part 32 may be a different fabric or a ne with high tear strength. The skirt 33 and the rest of the lower part 34 between the skirt 33 and the upper part 31 may have different insecticidal treatments. Also, the insecticidal content and type of insecticide may be different in the lower part 33 than in the upper part 31.

Preferably, the skirt extends at least 40 cm, preferably at least 60 cm, from the lower edge 30 of the barrier 1.

## Claims

1. An insecticidal barrier of a non-living material comprising a first region and a second region, wherein the first region comprises a synergist and the second region comprises an insecticide but no synergist for contact of both the first region and the second region by a flying insect, wherein the barrier is
- a mosquito net;
- a wall linen; or
- a fence.

2. An insecticidal barrier according to claim 1, wherein the first region comprises at least one synergist and at least one insecticide.

3. An insecticidal barrier according to claim 1 or 2, wherein the first region is provided by a polymer matrix into which the synergist in incorporated for gradual migration from the inside of the matrix to the surface of the matrix.

4. An insecticidal barrier according to claim 1 or 2, wherein the first region is provided by a polymer matrix into which the synergist is impregnated into a substantial depth from the surface of the matrix for gradual migration from the inside of the matrix to the surface of the material.

5. An insecticidal barrier according to claim 1 or 2, wherein the synergist is provided on the first region by a surface application.

6. An insecticidal barrier according to claim 5, wherein the surface application comprises a film coating.

7. An insecticidal barrier according to claim 5 or 6, wherein the surface application comprises a print.

8. An insecticidal barrier according to claim 5, 6, or 7, wherein the surface application comprises a laminate.

9. An insecticidal barrier according to anyone of the claims 3 - 8, wherein the surface application also contains an insecticide.

10. An insecticidal barrier according claim 3 or 4, wherein the first region comprises an insecticide provided by a surface application containing insecticide.

11. An insecticidal barrier according to a claim 10, wherein the surface application comprises a film coating.

12. An insecticidal barrier according to claim 10 or 11, wherein the surface application comprises a surface print.

13. An insecticidal barrier according to claim 12, wherein the surface print is an active print with insecticidal substance diffused into the barrier material.

14. An insecticidal barrier according to anyone of the preceding claims 10-13, wherein the surface application comprises a laminate.

15. An insecticidal barrier according to anyone of the claims 10-14, wherein the surface application is open for migration of the synergist through the surface application.

16. An insecticidal barrier according to any one of the claims 1-15, wherein the second region is provided by a polymer into which the insecticide in incorporated for gradual migration from the inside of the material to the surface of the material.

17. An insecticidal barrier according to any one of the claims 1-15, wherein the second region is provided by a polymer into which the insecticide is impregnated into a substantial depth from the surface of the material for gradual migration from the inside of the material to the surface of the material.

18. An insecticidal barrier according to anyone of the claims 1 - 15, wherein the surface of the polymer matrix of the second region is provided with a surface application containing insecticide.

19. An insecticidal barrier according to claim 18, wherein the surface application comprises a film coating.

20. An insecticidal barrier according to claim 18 or 19, wherein the surface application comprises a surface print.

21. An insecticidal barrier according to claim 20, wherein the surface print is an active print with insecticidal substance diffused into the barrier material.

22. An insecticidal barrier according to anyone of the claims 18-21, wherein the surface application comprises a laminate.

23. An insecticidal barrier according to any one of the claims 1-22, wherein the barrier is a fabric.

24. An insecticidal barrier according to any one of the claims 1-22, wherein the barrier is a tarpaulin.

25. An insecticidal barrier according to any one of the claims 1-22, wherein the first region of the barrier is provided by a type of barrier being either foil, tarpaulin, fabric or net; and wherein the second region is provided by a type of barrier different from the type of barrier of the first region.

26. An insecticidal barrier according to claim 25, wherein the barrier has an upper part as the first region and a lower part as part of the second region or constituting the second region, the upper part comprising an insecticidal net with a mesh size preventing selected insects, for example mosquitoes, to traverse the barrier, the lower part extending up to a height of more than 40 cm from the lower edge of the barrier, the lower part comprising an insecticidal tarpaulin.

27. An insecticidal barrier according to claim 25, wherein the barrier has an upper part as the first region and a lower part as part of the second region or constituting the second region, the upper part comprising an insecticidal net with a mesh size preventing selected insects, for example mosquitoes, to traverse the barrier, the lower part extending up to a height of more than 40 cm from the lower edge of the barrier, the lower part comprising an insecticidal foil.

28. An insecticidal barrier according to claim 25, wherein the barrier has an upper part as the first region and a lower part as part of the second region or constituting the second region, the upper part comprising an insecticidal net with a mesh size preventing selected insects, for example mosquitoes, to traverse the barrier, the lower part extending up to a height of more than 40 cm from the lower edge of the barrier, the lower part comprising an insecticidal woven or knitted fabrics or non-woven.

29. An insecticidal barrier according to claim 25, wherein the barrier has an upper part as the first region and a lower part as part of the second region or constituting the second region, the upper part comprising an insecticidal net with a mesh size preventing selected insects, for example mosquitoes, to traverse the barrier, the lower part extending up to a height of more than 40 cm from the lower edge of the barrier, the lower part comprising an insecticidal tarpaulin

30. An insecticidal barrier according to claim 25, wherein the barrier has an upper part as the first region and a lower part as part of the second region or constituting the second region, the upper part comprising an insecticidal net with a mesh size preventing selected insects, for example mosquitoes, to traverse the barrier, the lower part extending up to a height of more than 40 cm from the lower edge of the barrier, the lower part comprising a net material having a higher tear strength than the net of the upper part.

31. An insecticidal barrier according to claim 25, wherein the barrier has an upper part as the first region and a lower part as part of the second region or constituting the second region, the upper part comprising an insecticidal net with a mesh size preventing selected insects, for example mosquitoes, to traverse the barrier, the lower part extending up to a height of more than 40 cm from the lower edge of the barrier, the lower part comprising a net material with a higher mesh density

32. An insecticidal barrier according to claim 25, wherein the barrier has an upper part as the first region and a lower part as part of the second region or constituting the second region, the upper part comprising an insecticidal net with a mesh size preventing selected insects, for example mosquitoes, to traverse the barrier, the lower part extending up to a height of more than 40 cm from the lower edge of the barrier, the lower part comprising a net material with a higher weight density

33. An insecticidal barrier according to any one of the claims 25-32, wherein the lower part extends up to a height of more than 60 cm from the lower edge of the barrier.

34. An insecticidal barrier according any one of the claims 25-33, wherein the lower part extends up to a height of less than 100 cm from the lower edge of the barrier.

35. An insecticidal barrier according to any one of the claims 1-34, wherein the upper part of the barrier is a net with a canopy-like shape to cover a space around a bed or other space for human accommodation for keeping insects out of the space.

36. An insecticidal barrier according to any one of the claims 1-25, wherein the barrier is provided with a mosaic like pattern with first regions comprising the synergist and being located between second regions comprising insecticide without synergist.

37. An insecticidal barrier according to any one of the claims 1-25, wherein the barrier is provided with a stripe pattern or check pattern with alternating first and second regions.

38. An insecticidal barrier according to any one of the claims 1-25, wherein the first region is an upper part of the barrier and the second region is a lower part of the barrier.

39. An insecticidal barrier according to anyone of the claims 1-22, wherein the barrier comprises a net that has a distinct roof part and distinct side walls, and wherein the roof part constitutes the first region and the side walls constitute the second region.

40. An insecticidal barrier according to claim 39, wherein the side walls comprise a skirt at the lower edge of the side walls, the skirt being a fabrics skirt, tarpaulin skirt or foil skirt.

41. An insecticidal barrier according to claim 39 or 40, wherein the roof part is made of a different polymer than the side walls.

42. An insecticidal barrier according to claim 41, wherein the roof is made of polyethylene and the side walls are made of polyester.

43. An insecticidal barrier according to any preceding claim, wherein the synergist is Piperonyl Butoxide.

44. An insecticidal barrier according to any preceding claim, wherein the insecticide is a pyrethroid.

45. An insecticidal barrier according to claim 3 or 4, wherein the matrix of the first region has an initial, insecticide-free, solid state, where it contains at least one synergist, and wherein it has a final, solid state, where it contains an insecticidal coating.

46. An insecticidal barrier according to any preceding claim, wherein the first region is free from incorporated insecticides.

47. An insecticidal barrier according to any one of the claims 1-45, wherein the first region is provided by a polymer matrix into which an insecticide is incorporated or is impregnated into a substantial depth from the surface of the matrix for gradual migration from the inside of the matrix to the surface of the material.

48. An insecticidal barrier according to claim 11 or 19, wherein the film comprises a film forming component reducing wash off and degradation of the insecticide from the netting or fabric by forming a water and optionally oil resistant film, the film being a molecular shield on or around the matrix integrating the insecticide in the film, wherein the film forming component comprises a polymeric backbone fixative and one or more components selected from paraffin oils or waxes, silicons, silicon oils or waxes, and polyfluorocarbons, or derivatives thereof.

49. An insecticidal barrier according to claim 30 wherein the film forming component comprises polyflurocarbon attached to the polymeric backbone.

50. An insecticidal barrier according to any preceding claim, wherein the first region is in the order of the size of the second region or smaller than the second region.

51. An insecticidal barrier according to any preceding claim, wherein the area of the first region is substantially smaller than the area of the second region.

52. An insecticidal barrier according to any one of the preceding claims, wherein the first region is provided by a first polymer and the second region is provided by a second polymer different from the first polymer.

53. An insecticidal barrier according to any one of the claims, 1-7, 16, 43, 44, 46, 47, 52, wherein the barrier is a net comprising a mixture of a different types of threads, wherein the first region is constituted by a type of threads with synergist, and wherein the second region is constituted by a type of threads with that does not comprise a synergist.

54. An insecticidal barrier according to claim 53, wherein the threads are single filaments, multi-filaments, or plied threads.

55. An insecticidal barrier according to claim 53 or 54, wherein the first region and the second region are first type of threads and second type of threads interwoven.

## Patentansprüche

1. Insektizide Barriere aus einem nicht-lebenden Material, das eine erste Region und eine zweite Region umfasst, wobei die erste Region einen Synergisten umfasst und die zweite Region ein Insektizid, aber keinen Synergisten, umfasst für den Kontakt eines fliegenden Insekts mit sowohl der ersten als auch der zweiten Region, wobei die Barriere ein Mückennetz, eine Wandbekleidung oder ein Zaun ist.

2. Insektizide Barriere gemäß Anspruch 1, wobei die erste Region wenigstens einen Synergisten und wenigstens ein Insektizid umfasst.

3. Insektizide Barriere gemäß Anspruch 1 oder 2, wobei die erste Region durch eine Polymermatrix bereitgestellt wird, in welche der Synergist zur allmählichen Wanderung vom Inneren der Matrix zur Oberfläche der Matrix eingearbeitet ist.

4. Insektizide Barriere gemäß Anspruch 1 oder 2, wobei die erste Region durch eine Polymermatrix bereitgestellt wird, in welche der Synergist zu einer substantiellen Tiefe ab der Oberfläche der Matrix zur allmählichen Wanderung vom Inneren der Matrix zu der Oberfläche des Materials imprägniert ist.

5. Insektizide Barriere gemäß Anspruch 1 oder 2, wobei der Synergist an der ersten Region durch eine Oberflächenauftragung bereitgestellt ist.

6. Insektizide Barriere gemäß Anspruch 5, wobei die Oberflächenauftragung eine Filmbeschichtung umfasst.

7. Insektizide Barriere gemäß Anspruch 5 oder 6, wobei die Oberflächenauftragung einen Druck umfasst.

8. Insektizide Barriere gemäß Anspruch 5, 6 oder 7, wobei die Oberflächenauftragung ein Laminat umfasst.

9. Insektizide Barriere gemäß einem der Ansprüche 3 bis 8, wobei die Oberflächenauftragung auch ein Insektizid enthält.

10. Insektizide Barriere gemäß Anspruch 3 oder 4, wobei die erste Region ein Insektizid umfasst, das durch eine Oberflächenauftragung, die Insektizid enthält, bereitgestellt wird.

11. Insektizide Barriere gemäß Anspruch 10, wobei die Oberflächenauftragung eine Filmbeschichtung umfasst.

12. Insektizide Barriere gemäß Anspruch 10 oder 11, wobei die Oberflächenauftragung einen Oberflächendruck umfasst.

13. Insektizide Barriere gemäß Anspruch 13, wobei der Oberflächendruck ein aktiver Druck mit insektizider Substanz, diffundiert in das Barrierematerial, ist.

14. Insektizide Barriere gemäß einem der vorangehenden Ansprüche 10 bis 13, wobei die Oberflächenauftragung ein Laminat umfasst.

15. Insektizide Barriere gemäß einem der Ansprüche 10 bis 14, wobei die Oberflächenauftragung für eine Wanderung des Synergisten durch die Oberflächenauftragung offen ist.

16. Insektizide Barriere gemäß einem der Ansprüche 1 bis 15, wobei die zweite Region durch ein Polymer bereitgestellt wird, in welches das Insektizid zur allmählichen Wanderung vom Inneren des Materials zur Oberfläche des Materials eingearbeitet ist.

17. Insektizide Barriere gemäß einem der Ansprüche 1 bis 15, wobei die zweite Region durch ein Polymer bereitgestellt wird, in welches das Insektizid zu einer substantiellen Tiefe ab der Oberfläche des Materials zur allmählichen Wanderung vom Inneren des Materials zu der Oberfläche des Materials imprägniert ist.

18. Insektizide Barriere gemäß einem der Ansprüche 1 bis 15, wobei die Oberfläche der Polymermatrix der zweiten Region mit einer Oberflächenauftragung versehen ist, die Insektizid enthält.

19. Insektizide Barriere gemäß Anspruch 18, wobei die Oberflächenauftragung eine Filmbeschichtung umfasst.

20. Insektizide Barriere gemäß Anspruch 18 oder 19, wobei die Oberflächenauftragung einen Oberflächendruck umfasst.

21. Insektizide Barriere gemäß Anspruch 20, wobei der Oberflächendruck ein aktiver Druck mit insektizider Substanz ist, die in das Barrierematerial diffundiert ist.

22. Insektizide Barriere gemäß einem der Ansprüche 18 bis 21, wobei die Oberflächenauftragung ein Laminat umfasst.

23. Insektizide Barriere gemäß einem der Ansprüche 1 bis 22, wobei die Barriere ein Gewebe ist.

24. Insektizide Barriere gemäß einem der Ansprüche 1 bis 22, wobei die Barriere eine Plane ist.

25. Insektizide Barriere gemäß einem der Ansprüche 1 bis 22, wobei die erste Region der Barriere durch einen Barrieretyp bereitgestellt wird, der entweder eine Folie, eine Plane, ein Gewebe oder ein Netz ist, und wobei die zweite Region durch einen Barrieretyp bereitgestellt wird, der sich von dem Barrieretyp der ersten Region unterscheidet.

26. Insektizide Barriere gemäß Anspruch 25, wobei die Barriere einen oberen Teil als die erste Region und einen unteren Teil als Teil der zweiten Region oder die zweite Region bildend hat, wobei der obere Teil ein insektizides Netz mit einer Maschengröße, die verhindert, dass ausgewählte Insekten, zum Beispiel Moskitos, die Barriere durchqueren, umfasst, wobei sich der untere Teil bis zu einer Höhe von mehr als 40 cm ab dem unteren Rand der Barriere erstreckt, wobei der untere Teil eine insektizide Plane umfasst.

27. Insektizide Barriere gemäß Anspruch 25, wobei die Barriere einen oberen Teil als die erste Region hat und einen unteren Teil als Teil der zweiten Region oder die zweite Region bildend hat, wobei der obere Teil ein insektizides Netz mit einer Maschengröße, die verhindert, dass ausgewählte Insekten, zum Beispiel Moskitos, die Barriere durchqueren, umfasst, wobei sich der untere Teil bis zu einer Höhe von mehr als 40 cm vom unteren Rand der Barriere erstreckt, wobei der untere Teil eine insektizide Folie umfasst.

28. Insektizide Barriere gemäß Anspruch 25, wobei die Barriere einen oberen Teil als die erste Region hat und einen unteren Teil als Teil der zweiten Region oder die zweite Region bildend hat, wobei der obere Teil ein insektizides Netz mit einer Maschengröße, die verhindert, dass ausgewählte Insekten, zum Beispiel Moskitos, die Barriere durchqueren, umfasst, wobei sich der untere Teil bis zu einer Höhe von mehr als 40 cm vom unteren Rand der Barriere erstreckt, wobei der untere Teil ein insektizides gewebtes oder gestricktes Gewebe oder ein Vlies umfasst.

29. Insektizide Barriere gemäß Anspruch 25, wobei die Barriere einen oberen Teil als die erste Region hat und einen unteren Teil als Teil der zweiten Region oder die zweite Region bildend hat, wobei der obere Teil ein insektizides Netz mit einer Maschengröße, die verhindert, dass ausgewählte Insekten, zum Beispiel Moskitos, die Barriere durchqueren, umfasst, wobei sich der untere Teil bis zu einer Höhe von mehr als 40 cm vom unteren Rand der Barriere erstreckt, wobei der untere Teil ein insektizide Plane umfasst.

30. Insektizide Barriere gemäß Anspruch 25, wobei die Barriere einen oberen Teil als die erste Region hat und einen unteren Teil als Teil der zweiten Region oder die zweite Region bildend hat, wobei der obere Teil ein insektizides Netz mit einer Maschengröße, die verhindert, dass ausgewählte Insekten, zum Beispiel Moskitos, die Barriere durchqueren, umfasst, wobei sich der untere Teil bis zu einer Höhe von mehr als 40 cm vom unteren Rand der Barriere erstreckt, wobei der untere Teil ein Netzmaterial umfasst, das eine höhere Reißfestigkeit als das Netz des oberen Teils aufweist.

31. Insektizide Barriere gemäß Anspruch 25, wobei die Barriere einen oberen Teil als die erste Region hat und einen unteren Teil als Teil der zweiten Region oder die zweite Region bildend hat, wobei der obere Teil ein insektizides Netz mit einer Maschengröße, die verhindert, dass ausgewählte Insekten, zum Beispiel Moskitos, die Barriere durchqueren, umfasst, wobei sich der untere Teil bis zu einer Höhe von mehr als 40 cm vom unteren Rand der Barriere erstreckt, wobei der untere Teil ein Netzmaterial mit einer höheren Maschendichte umfasst.

32. Insektizide Barriere gemäß Anspruch 25, wobei die Barriere einen oberen Teil als die erste Region hat und einen unteren Teil als Teil der zweiten Region oder die zweite Region bildend hat, wobei der obere Teil ein insektizides Netz mit einer Maschengröße, die verhindert, dass ausgewählte Insekten, zum Beispiel Moskitos, die Barriere durchqueren, umfasst, wobei sich der untere Teil bis zu einer Höhe von mehr als 40 cm vom unteren Rand der Barriere erstreckt, wobei der untere Teil ein Netzmaterial mit einer höheren Gewichtsdichte umfasst.

33. Insektizide Barriere gemäß einem der Ansprüche 25-32, wobei sich der untere Teil bis zu einer Höhe von mehr als 60 cm ab dem unteren Rand der Barriere erstreckt.

34. Insektizide Barriere gemäß einem der Ansprüche 25-33, wobei sich der untere Teil bis zu einer Höhe von weniger als 100 cm ab dem unteren Rand der Barriere erstreckt.

35. Insektizide Barriere gemäß einem der Ansprüche 1-34, wobei der obere Teil der Barriere ein Netz mit einer baldachinartigen Form ist, um einen Raum um ein Bett oder einen anderen Raum für eine menschliche Unterkunft abzudecken, um Insekten aus dem Raum entfernt zu halten.

36. Insektizide Barriere gemäß einem der Ansprüche 1-25, wobei die Barriere mit einem mosaikartigen Muster mit ersten Regionen, die den Synergisten umfassen und zwischen zweiten Regionen, die Insektizid ohne Synergist umfassen, angeordnet sind, umfassen.

37. Insektizide Barriere gemäß einem der Ansprüche 1-25, wobei die Barriere mit einem Streifenmuster oder einem Karomuster mit abwechselnden ersten und zweiten Regionen ausgestattet ist.

38. Insektizide Barriere gemäß einem der Ansprüche 1-25, wobei die erste Region ein oberer Teil der Barriere ist und die zweite Region ein unterer Teil der Barriere ist.

39. Insektizide Barriere gemäß einem der Ansprüche 1-22, wobei die Barriere ein Netz umfasst, das einen unterschiedlichen Dachteil und unterschiedliche Seitenwände hat, und wobei der Dachteil die erste Region bildet und die Seitenwände die zweite Region bilden.

40. Insektizide Barriere gemäß Anspruch 39, wobei die Seitenwände eine Einfassung am unteren Rand der Seitenwände umfassen, wobei die Einfassung eine Gewebeeinfassung, eine Planeneinfassung oder eine Folieneinfassung ist.

41. Insektizide Barriere gemäß Anspruch 39 oder 40, wobei der Dachteil aus einem anderen Polymer als die Seitenwände hergestellt ist.

42. Insektizide Barriere gemäß Anspruch 41, wobei das Dach aus Polyethylen hergestellt ist und die Seitenwände aus Polyester hergestellt sind.

43. Insektizide Barriere gemäß einem vorangehenden Anspruch, wobei der Synergist PBO ist.

44. Insektizide Barriere gemäß einem vorangehenden Anspruch, wobei das Insektizid ein Pyrethroid ist.

45. Insektizide Barriere gemäß Anspruch 3 oder 4, wobei die Matrix der ersten Region einen anfänglichen insektizidfreien festen Zustand hat, in dem sie wenigstens einen Synergisten enthält, und wobei sie einen endgültigen, festen Zustand hat, in dem sie eine insektizide Beschichtung enthält.

46. Insektizide Barriere gemäß einem vorangehenden Anspruch, wobei die erste Region frei von eingearbeiteten Insektiziden ist.

47. Insektizide Barriere gemäß einem der Ansprüche 1-45, wobei die erste Region durch eine Polymermatrix bereitgestellt wird, in welche ein Insektizid eingearbeitet ist oder in eine substantielle Tiefe ab der Oberfläche der Matrix zur allmählichen Wanderung vom Inneren der Matrix zur Oberfläche des Materials imprägniert ist.

48. Insektizide Barriere gemäß Anspruch 11 oder 19, wobei der Film eine filmbildende Komponente umfasst, die ein Auswaschen und einen Abbau des Insektizids aus dem Netz oder dem Gewebe durch Bildung eines wasser- und gegebenenfalls ölbeständigen Films verringert, wobei der Film ein molekularer Schild an oder um die Matrix ist, die das Insektizid in dem Film integriert, wobei die filmbildende Komponente ein Polymerhauptketten-Fixativ und eine oder mehrere Komponente(n), ausgewählt aus Paraffinölen oder -wachsen, Silikonen, Silikonölen oder -wachsen und Polyfluorkohlenstoffen oder Derivaten davon, umfasst.

49. Insektizide Barriere gemäß Anspruch 30, wobei die filmbildende Komponente Polyfluorkohlenstoff, der an die Polymerhauptkette gebunden ist, umfasst.

50. Insektizide Barriere gemäß einem vorangehenden Anspruch, wobei die erste Region in der Größenordnung der zweiten Region oder kleiner als die zweite Region ist.

51. Insektizide Barriere gemäß einem vorangehenden Anspruch, wobei der Bereich der ersten Region wesentlich kleiner als der Bereich der zweiten Region ist.

52. Insektizide Barriere gemäß einem der vorangehenden Ansprüche, wobei die erste Region durch ein erstes Polymer bereitgestellt wird und die zweite Region durch ein zweites Polymer, das sich von dem ersten Polymer unterscheidet, bereitgestellt wird.

53. Insektizide Barriere gemäß einem der Anspüche 1-7, 16, 43, 44, 46, 47, oder 52, wobei die Barriere ein Netz ist, daß eine Mischung aus verschiedenen Fadentypen umfaßt, wobei ein Fadentyp mit Synergist die erste Region ausmacht und ein Fadentyp, der keinen Synergist umfaßt, die zweite Region ausmacht

54. Insektizide Barriere gemäß Anspruch 53, wobei die Fäden Einzelfilamente, Multifilamente oder verzwirnte Fäden sind.

55. Insektizide Barriere gemäß Anspruch 53 oder 54, wobei die erste Region und zweite Region verwobene erste und zweite Fadentypen sind.

## Revendications

1. Barrière insecticide en un matériau non vivant comprenant une première région et une deuxième région, dans laquelle la première région comprend un agent de synergie et la deuxième région comprend un insecticide mais pas d'agent de synergie pour un contact avec un insecte volant dans la première région et la deuxième région, dans laquelle la barrière constitue :
- une moustiquaire,
- un linge de mur, ou
- une clôture.

2. Barrière insecticide selon la revendication 1, dans laquelle la première région comprend au moins un agent de synergie et au moins un insecticide.

3. Barrière insecticide selon la revendication 1 ou 2, dans laquelle la première région est formée par une matrice polymère dans laquelle l'agent de synergie est incorporé pour une migration progressive de l'intérieur de la matrice à la surface de la matrice.

4. Barrière insecticide selon la revendication 1 ou 2, dans laquelle la première région est formée par une matrice polymère dans laquelle l'agent de synergie est imprégné à une profondeur substantielle par rapport à la surface de la matrice pour une migration progressive de l'intérieur de la matrice à la surface du matériau.

5. Barrière insecticide selon la revendication 1 ou 2, dans laquelle l'agent de synergie est disposé sur la première région par application en surface.

6. Barrière insecticide selon la revendication 5, dans laquelle l'application en surface comprend une déposition de film.

7. Barrière insecticide selon la revendication 5 ou 6, dans laquelle l'application en surface comprend une impression.

8. Barrière insecticide selon la revendication 5, 6 ou 7, dans laquelle l'application en surface comprend un stratifié.

9. Barrière insecticide selon l'une quelconque des revendications 3 à 8, dans laquelle l'application en surface contient aussi un insecticide.

10. Barrière insecticide selon la revendication 3 ou 4, dans laquelle la première région comprend un insecticide apporté par une application en surface contenant un insecticide.

11. Barrière insecticide selon la revendication 10, dans laquelle l'application en surface comprend une déposition de film.

12. Barrière insecticide selon la revendication 10 ou 11, dans laquelle l'application en surface comprend une impression en surface.

13. Barrière insecticide selon la revendication 12, dans laquelle l'impression en surface est une impression active avec une substance insecticide diffusée dans le matériau de barrière.

14. Barrière insecticide selon l'une quelconque des revendications 10 à 13 précédentes, dans laquelle l'application en surface comprend un stratifié.

15. Barrière insecticide selon l'une quelconque des revendications 10 à 14, dans laquelle l'application en surface est ouverte pour une migration de l'agent de synergie à travers l'application en surface.

16. Barrière insecticide selon l'une quelconque des revendications 1 à 15, dans laquelle la deuxième région est formée par un polymère dans lequel l'insecticide est incorporé pour une migration progressive de l'intérieur du matériau à la surface du matériau.

17. Barrière insecticide selon l'une quelconque des revendications 1 à 15, dans laquelle la deuxième région est formée par un polymère dans lequel l'insecticide est imprégné à une profondeur substantielle par rapport à la surface du matériau pour une migration progressive de l'intérieur du matériau à la surface du matériau.

18. Barrière insecticide selon l'une quelconque des revendications 1 à 15, dans laquelle la surface de la matrice polymère de la deuxième région est dotée d'une application en surface contenant un insecticide.

19. Barrière insecticide selon la revendication 18, dans laquelle l'application en surface comprend une déposition de film.

20. Barrière insecticide selon la revendication 18 ou 19, dans laquelle l'application en surface comprend une impression en surface.

21. Barrière insecticide selon la revendication 20, dans laquelle l'impression en surface est une impression active avec une substance insecticide diffusée dans le matériau de barrière.

22. Barrière insecticide selon l'une quelconque des revendications 18 à 21, dans laquelle l'application en surface comprend un stratifié.

23. Barrière insecticide selon l'une quelconque des revendications 1 à 22, laquelle barrière est une étoffe.

24. Barrière insecticide selon l'une quelconque des revendications 1 à 22, laquelle barrière est une bâche.

25. Barrière insecticide selon l'une quelconque des revendications 1 à 22, dans laquelle la première région de la barrière est formée par un type de barrière qui est une feuille, une bâche, une étoffe ou un filet ; et dans laquelle la deuxième région est formée par un type de barrière différent du type de barrière de la première région.

26. Barrière insecticide selon la revendication 25, laquelle barrière a une partie supérieure en tant que première région et une partie inférieure en tant que partie de la deuxième région ou constituant la deuxième région, la partie supérieure comprenant un filet insecticide ayant une taille d'ouverture de mailles empêchant des insectes sélectionnés, par exemple des moustiques, de traverser la barrière, la partie inférieure s'étendant jusqu'à une hauteur de plus de 40 cm par rapport au bord inférieur de la barrière, la partie inférieure comprenant une bâche insecticide.

27. Barrière insecticide selon la revendication 25, laquelle barrière a une partie supérieure en tant que première région et une partie inférieure en tant que partie de la deuxième région ou constituant la deuxième région, la partie supérieure comprenant un filet insecticide ayant une taille d'ouverture de mailles empêchant des insectes sélectionnés, par exemple des moustiques, de traverser la barrière, la partie inférieure s'étendant jusqu'à une hauteur de plus de 40 cm par rapport au bord inférieur de la barrière, la partie inférieure comprenant une feuille insecticide.

28. Barrière insecticide selon la revendication 25, laquelle barrière a une partie supérieure en tant que première région et une partie inférieure en tant que partie de la deuxième région ou constituant la deuxième région, la partie supérieure comprenant un filet insecticide ayant une taille d'ouverture de mailles empêchant des insectes sélectionnés, par exemple des moustiques, de traverser la barrière, la partie inférieure s'étendant jusqu'à une hauteur de plus de 40 cm par rapport au bord inférieur de la barrière, la partie inférieure comprenant une étoffe tissée ou tricotée ou un non-tissé insecticide.

29. Barrière insecticide selon la revendication 25, laquelle barrière a une partie supérieure en tant que première région et une partie inférieure en tant que partie de la deuxième région ou constituant la deuxième région, la partie supérieure comprenant un filet insecticide ayant une taille d'ouverture de mailles empêchant des insectes sélectionnés, par exemple des moustiques, de traverser la barrière, la partie inférieure s'étendant jusqu'à une hauteur de plus de 40 cm par rapport au bord inférieur de la barrière, la partie inférieure comprenant une bâche insecticide.

30. Barrière insecticide selon la revendication 25, laquelle barrière a une partie supérieure en tant que première région et une partie inférieure en tant que partie de la deuxième région ou constituant la deuxième région, la partie supérieure comprenant un filet insecticide ayant une taille d'ouverture de mailles empêchant des insectes sélectionnés, par exemple des moustiques, de traverser la barrière, la partie inférieure s'étendant jusqu'à une hauteur de plus de 40 cm par rapport au bord inférieur de la barrière, la partie inférieure comprenant un matériau en filet ayant une résistance à la déchirure supérieure à celle du filet de la partie supérieure.

31. Barrière insecticide selon la revendication 25, laquelle barrière a une partie supérieure en tant que première région et une partie inférieure en tant que partie de la deuxième région ou constituant la deuxième région, la partie supérieure comprenant un filet insecticide ayant une taille d'ouverture de mailles empêchant des insectes sélectionnés, par exemple des moustiques, de traverser la barrière, la partie inférieure s'étendant jusqu'à une hauteur de plus de 40 cm par rapport au bord inférieur de la barrière, la partie inférieure comprenant un matériau en filet ayant une plus grande densité de mailles.

32. Barrière insecticide selon la revendication 25, laquelle barrière a une partie supérieure en tant que première région et une partie inférieure en tant que partie de la deuxième région ou constituant la deuxième région, la partie supérieure comprenant un filet insecticide ayant une taille d'ouverture de mailles empêchant des insectes sélectionnés, par exemple des moustiques, de traverser la barrière, la partie inférieure s'étendant jusqu'à une hauteur de plus de 40 cm par rapport au bord inférieur de la barrière, la partie inférieure comprenant un matériau en filet ayant une plus grande masse volumique.

33. Barrière insecticide selon l'une quelconque des revendications 25 à 32, dans laquelle la partie inférieure s'étend jusqu'à une hauteur de plus de 60 cm par rapport au bord inférieur de la barrière.

34. Barrière insecticide selon l'une quelconque des revendications 25 à 33, dans laquelle la partie inférieure s'étend jusqu'à une hauteur de moins de 100 cm par rapport au bord inférieur de la barrière.

35. Barrière insecticide selon l'une quelconque des revendications 1 à 34, dans laquelle la partie supérieure de la barrière est un filet ayant une forme de baldaquin pour couvrir un espace autour d'un lit ou un autre espace pour le séjour d'un humain afin de maintenir les insectes en-dehors de l'espace.

36. Barrière insecticide selon l'une quelconque des revendications 1 à 25, laquelle barrière est pourvue d'un motif analogue à une mosaïque avec des premières régions comprenant l'agent de synergie et situées entre des deuxièmes régions comprenant un insecticide sans agent de synergie.

37. Barrière insecticide selon l'une quelconque des revendications 1 à 25, laquelle barrière est pourvue d'un motif en bandes ou d'un motif en échiquier avec des première et deuxième régions alternées.

38. Barrière insecticide selon l'une quelconque des revendications 1 à 25, dans laquelle la première région est une partie supérieure de la barrière et la deuxième région est une partie inférieure de la barrière.

39. Barrière insecticide selon l'une quelconque des revendications 1 à 22, laquelle barrière comprend un filet qui a une partie de toit distincte et des parois latérales distinctes, et dans laquelle la partie de toit constitue la première région et les parois latérales constituent la deuxième région.

40. Barrière insecticide selon la revendication 39, dans laquelle les parois latérales comprennent une jupe au niveau du bord inférieur des parois latérales, la jupe étant une jupe en étoffe, une jupe en bâche ou une jupe en feuille.

41. Barrière insecticide selon la revendication 39 ou 40, dans laquelle la partie de toit est faite en un polymère différent de celui des parois latérales.

42. Barrière insecticide selon la revendication 41, dans laquelle le toit est fait en polyéthylène et les parois latérales sont faites en polyester.

43. Barrière insecticide selon l'une quelconque des revendications précédentes, dans laquelle l'agent de synergie est le butoxyde de pipéronyle.

44. Barrière insecticide selon l'une quelconque des revendications précédentes, dans laquelle l'insecticide est un pyréthroïde.

45. Barrière insecticide selon la revendication 3 ou 4, dans laquelle la matrice de la première région a un état solide initial sans insecticide, dans lequel elle contient au moins un agent de synergie, et dans laquelle elle a un état solide final dans lequel elle contient un revêtement insecticide.

46. Barrière insecticide selon l'une quelconque des revendications précédentes, dans laquelle la première région est exempte d'insecticides incorporés.

47. Barrière insecticide selon l'une quelconque des revendications 1 à 45, dans laquelle la première région est formée par une matrice polymère dans laquelle un insecticide est incorporé ou est imprégné à une profondeur substantielle par rapport à la surface de la matrice pour une migration progressive de l'intérieur de la matrice à la surface du matériau.

48. Barrière insecticide selon la revendication 11 ou 19, dans laquelle le film comprend un composant filmogène réduisant l'élimination par lavage et la dégradation de l'insecticide depuis le filet ou le tissu en formant un film résistant à l'eau et éventuellement à l'huile, le film étant un blindage moléculaire sur ou autour de la matrice intégrant l'insecticide dans le film, dans laquelle le composant filmogène comprend un fixatif de charpente polymère et un ou plusieurs composants choisis parmi les huiles et cires de paraffine, les silicones, les huiles et cires siliconées, et les polyfluorocarbures, ou leurs dérivés.

49. Barrière insecticide selon la revendication 30, dans laquelle le composant filmogène comprend un polyfluorocarbure rattaché à la charpente polymère.

50. Barrière insecticide selon l'une quelconque des revendications précédentes, dans laquelle la première région a une taille de l'ordre de celle de la deuxième région ou inférieure à celle de la deuxième région.

51. Barrière insecticide selon l'une quelconque des revendications précédentes, dans laquelle la surface de la première région est sensiblement plus petite que la surface de la deuxième région.

52. Barrière insecticide selon l'une quelconque des revendications précédentes, dans laquelle la première région est formée par un premier polymère et la deuxième région est formée par un deuxième polymère différent du premier polymère.

53. Barrière insecticide selon l'une quelconque des revendications 1 à 7, 16, 43, 44, 46, 47, 52, laquelle barrière est un filet comprenant un mélange de différents types de fils, dans laquelle la première région constitue un type de fils avec un agent de synergie, et dans laquelle la deuxième région constitue un type de fils sans un agent de synergie.

54. Barrière insecticide selon la revendication 53, dans laquelle les fils sont des filaments individuels, des multi-filaments, ou des fils retors.

55. Barrière insecticide selon la revendication 53 ou 54, dans laquelle la première région et la deuxième région constituent des premiers types de fils et des deuxièmes types de fils tissés.
